# EUROPÄISCHE PATENTANMELDUNG

(11) **EP 4 036 147 A1**
(43) Veröffentlichungstag der Anmeldung: **03.08.2022**
(21) Anmeldenummer: 21154658.5
(22) Anmeldetag: 02.02.2021
(51) Int. Cl.: C08G 64/30, C08G 64/02, C08G 64/18

(54) **VERFAHREN ZUM STOPPEN EINES PROZESSES ZUR HERSTELLUNG VON POLYETHERCARBONATALKOHOLEN**

(71) Anmelder: Covestro Deutschland AG, 51373 Leverkusen (DE)
(72) Erfinder: WOLF, Aurel, 42489 Wülfrath (DE); SCHUETZE, Mike, 51379 Leverkusen (DE); TRAVING, Michael, 51399 Burscheid (DE); BECKER, Agnes, 51375 Leverkusen (DE); WITTE, Raphael, 51375 Leverkusen (DE)
(74) Vertreter: Levpat

(57) **Zusammenfassung**

Gegenstand der Erfindung ist ein Verfahren zum sicheren Stoppen einer laufenden Polymerisation von cyclischen Carbonaten an eine H-funktionelle Starterfunktion in Anwesenheit eines Katalysators gemäß der Formel

MₙX (I),

wobei
M ausgewählt ist aus den Alkalimetallkationen Li⁺, Na⁺, K⁺ und Cs⁺,
X ausgewählt ist aus den Anionen SnO₃²⁻, CO₃²⁻, PO₄³⁻, RCOO⁻, VO₃⁻, WO₄²⁻, MoO₄²⁻ und VO₄³⁻,
n ist 1, wenn X = VO₃⁻, RCOO⁻
n ist 2, wenn X = SnO₃²⁻, CO₃²⁻, WO₄²⁻ oder MoO₄²⁻
n ist 3, wenn X = PO₄³⁻ oder VO₄³⁻,
R ein organischer Rest ist, bevorzugt C1 bis C12-Alkylrest,
wobei zum Stoppen der Polymerisation eine Brønsted-Säure zudosiert wird und das molare Verhältnis von Katalysator zu Bronsted-Säure 1:1,1 bis 1:50 beträgt.

## Beschreibung

Die vorliegende Erfindung betrifft ein Verfahren zum sicheren Stoppen einer laufenden Polymerisation von cyclischen Carbonaten an eine H-funktionelle Startersubstanz in Anwesenheit eines Katalysators.

Es ist bekannt, dass cyclische Carbonate, wie z.B. cyclisches Propylencarbonat, als Monomer in der Herstellung von Polycarbonatpolyolen eingesetzt werden können. Diese Umsetzung basiert auf einer Umesterung und wird in Anwesenheit von Katalysatoren wie beispielsweise Titan-Verbindungen, wie Titandioxid oder Titantetrabutylat (EP 0 343 572) durchgeführt.

Ebenfalls offenbart ist der Einsatz von Katalysatoren wie beispielsweise Na₃VO₄ und Na₂WO₄ für die Anlagerung cyclischen Ethylencarbonats an Monoethylenglykol und Diethylenglykol (R.F. Harris, Journal of Applied Polymer Science, 1989, 37, 183-200). Diese Anlagerung erfolgt nach dem Prinzip einer Ringöffnenden Polymerisation (auch ROP genannt) wobei Anteile des im cyclischen Carbonat gebundenen CO₂ bei der Polymerisation entweichen. Verfahren mit diesen Katalysatoren führen dementsprechend nicht zu alternierenden Polycarbonatpolyolen, sondern zu Polyethercarbonatpolyolen.

Auf Grund des entstehenden CO₂ ist es wichtig bei einer fehlerhaften Fahrweise des Prozesses die plötzliche Entstehung eines Überdrucks durch CO₂ aus sicherheitstechnischen Gründen zu verhindern. Die Aufgabe der vorliegenden Erfindung ist somit die Bereitstellung eines Verfahrens bei dem die Polymerisation, d.h. die Anlagerung von cyclischen Carbonat, und somit die Bildung von CO₂ schnell gestoppt wird.

Überraschend wurde gefunden, dass die technische Aufgabe gelöst wird durch ein Verfahren zum sicheren Stoppen einer laufenden Polymerisation von cyclischen Carbonaten an eine H-funktionelle Starterfunktion in Anwesenheit eines Katalysators gemäß der Formel

MₙX (I),

wobei
M ausgewählt ist aus den Alkalimetallkationen Li⁺, Na⁺, K⁺ und Cs⁺,
X ausgewählt ist aus den Anionen SnO₃²⁻, CO₃²⁻, PO₄³⁻, RCOO⁻, VO₃⁻, WO₄²⁻, MoO₄²⁻ und VO₄³⁻,
n ist 1, wenn X = VO₃⁻, RCOO⁻
n ist 2, wenn X = SnO₃²⁻, CO₃²⁻, WO₄²⁻ oder MoO₄²⁻
n ist 3, wenn X = PO₄³⁻ oder VO₄³⁻,
R ein organischer Rest ist, bevorzugt C1 bis C12-Alkylrest,
wobei zum Stoppen der Polymerisation eine Bronsted-Säure zudosiert wird und das molare Verhältnis von Katalysator zu Brønsted-Säure 1:1,1 bis 1:50 beträgt.

Bei der Herstellung von Polyethercarbonatalkoholen, bevorzugt Polyethercarbonatpolyolen, mit cycl. Carbonaten kann zunächst eine H-funktionelle Startersubstanz und cyclisches Carbonat im Reaktor vorgelegt werden. Es kann dabei auch nur eine Teilmenge der H-funktionellen Startersubstanz und/oder eine Teilmenge cyclischen Carbonats im Reaktor vorgelegt werden. Anschließend wird gegebenenfalls die für die ringöffnende Polymerisation benötigte Menge an Katalysator in den Reaktor gegeben. Die Reihenfolge der Zugabe ist dabei nicht entscheidend. Es kann auch erst der Katalysator und anschließend eine H-funktionelle Startersubstanz und cyclisches Carbonat in den Reaktor gefüllt werden. Alternativ kann auch erst der Katalysator in einer H-fünktionellen Startersubstanz suspendiert und anschließend die Suspension in den Reaktor gefüllt werden.

Der Katalysator wird vorzugsweise in einer Menge eingesetzt, so dass der Gehalt an Katalysator im resultierenden Reaktionsprodukt 10 bis 50000 ppm, besonders bevorzugt 20 bis 30000 ppm und höchst bevorzugt 50 bis 20000 ppm beträgt.

In einer bevorzugten Ausführungsform wird in das resultierende Gemisch aus (a) einer Teilmenge H-funktioneller Startersubstanz, (b) Katalysator und (c) cyclischen Carbonats bei einer Temperatur von 20°C bis 120°C, besonders bevorzugt von 40°C bis 100°C Inertgas (beispielsweise Argon oder Stickstoff) eingeleitet.

Der Katalysator kann in fester Form oder als Suspension in cyclischem Carbonat, in H-fünktioneller Startersubstanz oder in einer Mischung aus den genannten zugegeben werden.

In einer weiteren bevorzugten Ausführungsform wird in einem ersten Schritt eine Teilmenge der H-funktionellen Startersubstanzen und cyclisches Carbonat vorgelegt und in einem anschließenden zweiten Schritt die Temperatur der Teilmenge H-funktioneller Startersubstanz und des cyclischen Carbonats auf 40°C bis 120°C, bevorzugt 40°C bis 100°C gebracht und/oder der Druck im Reaktor auf weniger als 500 mbar, bevorzugt 5 mbar bis 100 mbar erniedrigt, wobei gegebenenfalls ein InertgasStrom (beispielsweise von Argon oder Stickstoff) angelegt wird und der Katalysator zur Teilmenge H-funktioneller Startersubstanz im ersten Schritt oder unmittelbar anschließend im zweiten Schritt zugesetzt wird.

Das resultierende Reaktionsgemisch wird dann bei einer Temperatur von 130°C bis 230°C, bevorzugt 140°C bis 200°C, besonders bevorzugt 160°C bis 190°C erhitzt, wobei gegebenenfalls ein InertgasStrom (beispielsweise von Argon oder Stickstoff) durch den Reaktor geleitet werden kann. Die Reaktion wird in der Regel solange fortgeführt bis bei der eingestellten Temperatur keine Gasentwicklung mehr beobachtet wird.

Um die Reaktion und damit die Gasentwicklung zu stoppen, wird erfindungsgemäß während der Reaktion eine Bronsted-Säure zudosiert. Die Zugabe der Bronsted-Säure erfolgt dabei mit einer einzelnen Dosierung. Die Bronsted-Säure wird vorzugsweise in der Menge eingesetzt, dass ein molares Verhältnis von Katalysator zu Bronsted-Säure von 1:1,1 bis 1:50, bevorzugt von 1:1,5 bis 1:30, besonders bevorzugt von 1:2 bis 1:5 in dem Reaktionsgemisch besteht. Die Bronsted-Säure weist vorzugsweise einen pKs-Wert von 5,0 oder weniger, bevorzugt 4,0 oder weniger, besonders bevorzugt 2,5 oder weniger auf. In einer besonderen Ausführungsform handelt es sich um eine anorganische Bronsted-Säure, bevorzugt um eine Verbindung aus der Gruppe bestehend aus Phosphorsäure, Mono- oder Dialkylphosphaten, Phosphonsäure, Phosphinsäure, Schwefelsäure oder Salzsäure.

Wurde nur eine Teilmenge an H-funktioneller Startersubstanz und/oder eine Teilmenge an cyclischem Carbonat in den Reaktor vorgelegt, erfolgt die Dosierung der restlichen Menge an H-funktioneller Startersubstanz und/oder cyclischen Carbonats in den Reaktor kontinuierlich. Es ist möglich, das cyclische Carbonat mit konstanter Dosierrate zu dosieren oder die Dosierrate allmählich oder schrittweise zu steigern oder zu senken oder das cyclische Carbonat portionsweise zuzugeben. Bevorzugt wird das cyclische Carbonat mit konstanter Dosierrate dem Reaktionsgemisch zugegeben. Die Dosierung des cyclischen Carbonats bzw. der H-funktionellen Startersubstanzen kann simultan oder sequentiell über jeweils separate Dosierungen (Zugaben) erfolgen oder über eine oder mehrere Dosierungen, wobei die H-funktionellen Startersubstanzen einzeln oder als Gemisch dosiert werden kann.

In dem Verfahren können die cyclischen Carbonate einzeln oder als Gemische eingesetzt werden. Bevorzugt wird als cyclisches Carbonat cyclisches Propylencarbonat (cPC), cyclisches Ethylencarbonat (cEC) oder eine Mischung aus beiden eingesetzt.

Die Polyethercarbonatalkoholen können in einem batch, semi-batch oder kontinuierlichen Verfahren hergestellt werden. Bevorzugt werden die Polyethercarbonatalkohole in einem kontinuierlichen Verfahren hergestellt, das sowohl eine kontinuierliche Polymerisation als auch eine kontinuierliche Zugabe der H-funktionellen Startersubstanz umfasst.

Gegenstand der Erfindung ist daher auch ein Verfahren, wobei H-funktionelle Startersubstanz, cyclisches Carbonat sowie Katalysator kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei der Katalysator in H-funktioneller Startersubstanz suspendiert kontinuierlich zugegeben.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder der Reaktanden aufrechterhalten wird. Die Zufuhr des Katalysators und der Reaktanden kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass Startersubstanz während des Hauptteils des Polymerisations-Verfahrens vorhanden ist. Eine inkrementelle Zugabe von Katalysator und/oder Reaktand, der die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

### H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, -NH₂ (primäre Amine), -NH- (sekundäre Amine), -SH und -CO₂H, bevorzugt sind -OH, -NH₂ und -CO₂H, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF^{®} der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C₁-C₂₄ Alkyl-Fettsäureester, die im Mittel mindestens 2 OH-Gruppen pro Molekül enthalten und Wasser, eingesetzt. Beispielhaft handelt es sich bei den C₁-C₂₄ Alkyl-Fettsäureester, die im Mittel mindestens 2 OH-Gruppen pro Molekül enthalten, um Handelsprodukte wie Lupranol Balance^{®} (Fa. BASF AG), Merginol^{®}-Typen (Fa. Hobum Oleochemicals GmbH), Sovermol^{®}-Typen (Fa. Cognis Deutschland GmbH & Co. KG) und Soyol^{®}TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Dodecanol, Tetradecanol, Hexadecanol, Octadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionelle Startersubstanz kann auch aus der Substanzklasse der Polyetherpolyole ausgewählt sein, die ein zahlenmittleres Molekulargewicht Mₙ im Bereich von 18 bis 4500 g/mol und eine Funktionalität von 2 bis 3 aufweisen. Das zahlenmittlere Molekulargewicht Mₙ wird gemäß DIN 55672-1 (August 2007) gemessenen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatalkohole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 1 bis 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mₙ im Bereich von 150 bis 8000 g/mol bei einer Funktionalität von 2 bis 3 und Polyetherpolyole mit einem Molekulargewicht Mₙ im Bereich von 150 bis 8000 g/mol und einer Funktionalität von 2 bis 3.

### Katalysator

Als geeignete Katalysatoren für die Anlagerung von cyclischen Carbonat an H-funktionelle Startersubstanzen werden Katalysatoren gemäß Formel (I) eingesetzt

MₙX (I),

wobei
M ausgewählt ist aus den Alkalimetallkationen Li⁺, Na⁺, K⁺ und Cs⁺,
X ausgewählt ist aus den Anionen SnO₃²⁻, CO₃²⁻, PO₄³⁻, RCOO⁻, VO₃⁻, WO₄²⁻, MoO₄²⁻ und VO₄³⁻,
n ist 1, wenn X = VO₃⁻, RCOO⁻
n ist 2, wenn X = SnO₃²⁻, CO₃²⁻, WO₄²⁻ oder MoO₄²⁻
n ist 3, wenn X = PO₄³⁻ oder VO₄³⁻,
R ein organischer Rest ist.

Das Anion X des Katalysators ist bevorzugt VO₃⁻, VO₄³⁻ oder PO₄³⁻. Als Alkalimetallkation M wird bevorzugt Na⁺ oder K⁺ eingesetzt. Ganz besonders bevorzugt wird als Katalysator eine Verbindung ausgewählt aus der Gruppe bestehen aus Na₃VO₄, K₃VO₄, NaVO₃, KVO₃, Na₃PO₄ und K₃PO₄ eingesetzt. Der organische Rest R kann ein gesättigter oder ungesättigter, linearer oder verzweigter, aliphatischer oder cycloaliphatischer oder einen aromatischen oder araliphatischen Rest sein, der gegebenenfalls Heteroatome, wie N, S oder O enthalten kann. Bevorzugt handelt es sich bei dem organischen Rest R um einen C1 bis C12-Alkylrest, besonders bevorzugt handelt es sich um einen Methylrest.

Die nach dem erfindungsgemäßen Verfahren erhaltenen Polyethercarbonatalkohole können beispielsweise durch Umsetzung mit Di- und/oder Polyisocyanaten zu Polyurethanen weiterverarbeitet werden.

Weitere Anwendungsmöglichkeiten sind in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Emulgatoren, Dispergiermittel, Schmiermitteln, Prozesschemikalien für die Papier- oder Textilherstellung, medizinische Anwendungen, Wirkstofffreisetzung, kosmetischen Formulierungen, wie beispielsweise in Haut- oder Sonnenschutzcreme oder Haarpflegeprodukten zu finden.

### Experimenteller Teil

### Eingesetzte Rohstoffe:

Alle aufgezählten Chemikalien wurden vom genannten Hersteller in der angegebenen Reinheit erworben und ohne weitere Behandlung für die Beispiele verwendet.

| | |
|---|---|
| cEC: | Cyclisches Ethylencarbonat (Sigma-Aldrich, 99 %) |
| Polyol 1 | Polyetherpolyol mit einer OH-Funktionalität von 2 und einer OH-Zahl von 515 mg KOH/g (Covestro Deutschland AG) |
| Na₃VO₄: | Natriumorthovanadat (abcr) |
| H₃PO₄ (85%ig): | Phosphorsäure (Sigma-Aldrich, 85%ig) |

### Beispiel 1:

In einem 500 mL Vierhalsglaskolben mit Rückflusskühler, KPG-Rührer, Thermofühler, Stickstoffzuleitung und Überdruckventil wurden 100 g cyclisches Ethylencarbonat, 40,36 g Polyol 1 und 1,04 g K₃VO₄ zugegeben. Der Reaktor wurde mit 10 L/h Stickstoff für 30 Minuten gespült. Anschließend wurde auf 150°C aufgeheizt, wobei sich die Reaktion durch eine Bildung von CO₂ bemerkbar machte.

Zu einem bestimmten Zeitpunkt nach Erreichen der Reaktionstemperatur (t = 10 min) wurde durch Zugabe von 1,96 g H₃PO₄ (85 %ig) die Reaktion innerhalb von Sekunden gestoppt, was sich an dem Stillstand der Gasbildung bemerkbar machte.

### Beispiel 2:

Beispiel 2 wurde analog Beispiel 1 durchgeführt, wobei 229 mg H₃PO₄ (85 %ig) als Brønsted-Säure eingesetzt wurden. Es wurde weiterhin eine CO₂-Bildung und damit einen Reaktionsfortschritt beobachtet.

### Beispiel 3:

Beispiel 3 wurde analog Beispiel 1 durchgeführt, wobei 655 mg H₃PO₄ (85 %ig) als Brønsted-Säure eingesetzt wurden. Es wurde weiterhin eine CO₂-Bildung und damit einen Reaktionsfortschritt beobachtet.

**Tabelle 1: Übersicht der Beispiele**

| Beispiel | Verhältnis Säure / Katalysator [mol/mol] | Säure | CO₂-Bildung |
|---|---|---|---|
| 1 | 3:1 | H₃PO₄ | Nein, Reaktion gestoppt |
| 2* | 0.33:1 | H₃PO₄ | Ja |
| 3* | 1:1 | H₃PO₄ | Ja |

| | | | |
|---|---|---|---|
| *Vergleichsbeispiel | | | |

## Patentansprüche

1. Verfahren zum sicheren Stoppen einer laufenden Polymerisation von cyclischen Carbonaten an eine H-funktionelle Starterfunktion in Anwesenheit eines Katalysators gemäß der Formel
MₙX (I),
wobei
M ausgewählt ist aus den Alkalimetallkationen Li⁺, Na⁺, K⁺ und Cs⁺,
X ausgewählt ist aus den Anionen SnO₃²⁻, CO₃²⁻, PO₄³⁻, RCOO⁻, VO₃⁻, WO₄²⁻, MoO₄²⁻ und VO₄³⁻,
n ist 1, wenn X = VO₃⁻, RCOO⁻
n ist 2, wenn X = SnO₃²⁻, CO₃²⁻, WO₄²⁻ oder MoO₄²⁻
n ist 3, wenn X = PO₄³⁻ oder VO₄³⁻,
R ein organischer Rest ist, bevorzugt C1 bis C12-Alkylrest,
wobei zum Stoppen der Polymerisation eine Bronsted-Säure zudosiert wird und das molare Verhältnis von Katalysator zu Bronsted-Säure 1:1,1 bis 1:50 beträgt.

2. Verfahren gemäß Anspruch 1, **dadurch gekennzeichnet, dass** das molare Verhältnis von Katalysator zu Bronsted-Säure 1:1,5 bis 1:30, besonders bevorzugt 1:2 bis 1:5 beträgt.

3. Verfahren gemäß Anspruch 1 oder 2, **dadurch gekennzeichnet, dass** die Bronsted-Säure einen pKₛ-Wert von 5,0 oder weniger aufweist, bevorzugt 4,0 oder weniger, besonders bevorzugt 2,5 oder weniger.

4. Verfahren gemäß einem der Ansprüche 1 bis 3, **dadurch gekennzeichnet, dass** eine anorganische Bronsted-Säure eingesetzt wird.

5. Verfahren gemäß einem der Ansprüche 1 bis 3, **dadurch gekennzeichnet, dass** als Bronsted-Säure mindestens eine Verbindung ausgewählt aus der Gruppe bestehend aus Phosphorsäure, Mono- oder Dialkylphosphaten, Phosphonsäure, Phosphinsäure, Schwefelsäure oder Salzsäure eingesetzt wird.

6. Verfahren gemäß einem der Ansprüche 1 bis 5, **dadurch gekennzeichnet, dass** in Formel (I) M ausgewählt ist aus den Alkalimetallkationen Na⁺ oder K⁺.

7. Verfahren gemäß einem der Ansprüche 1 bis 5, **dadurch gekennzeichnet, dass** in Formel (I) X ausgewählt ist aus den Anionen PO₄³⁻, VO³⁻ oder VO₄³⁻.

8. Verfahren gemäß Anspruch 1, **dadurch gekennzeichnet, dass** als Katalysator eine Verbindung ausgewählt aus der Gruppe bestehend aus Na₃VO₄, K₃VO₄, NaVO₃, KVO₃, Na₃PO₄ und K₃PO₄ eingesetzt wird.

9. Verfahren gemäß einem der Ansprüche 1 bis 8, **dadurch gekennzeichnet, dass** als cyclisches Carbonat Propylencarbonat, Ethylencarbonat oder eine Mischung aus Propylencarbonat und Ethylencarbonat eingesetzt wird.

10. Verfahren gemäß einem der Ansprüche 1 bis 9, **dadurch gekennzeichnet, dass** die H-funktionelle Startersubstanz ein nach DIN 55672-1 (August 2007) gemessenes zahlenmittleres Molekulargewicht bis 10.000 g/mol, bevorzugt bis 5.000 g/mol, besonders bevorzugt bis 2.500 g/mol aufweist.

11. Verfahren gemäß einem der Ansprüche 1 bis 9, **dadurch gekennzeichnet, dass** die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem nach DIN 55672-1 (August 2007) gemessenen zahlenmittleren Molekulargewicht Mₙ im Bereich von 150 bis 8000 g/mol bei einer Funktionalität von 2 bis 3 und Polyetherpolyole mit einem nach DIN 55672-1 (August 2007) gemessenen zahlenmittleren Molekulargewicht Mₙ im Bereich von 150 bis 8000 g/mol und einer Funktionalität von 2 bis 3.

12. Verfahren gemäß einem der Ansprüche 1 bis 11, **dadurch gekennzeichnet, dass** der Katalysator in einem Anteil von 10 bis 50000 ppm, besonders bevorzugt 20 bis 30000 ppm und höchst bevorzugt 50 bis 20000 ppm vorliegt.

13. Verfahren gemäß einem der Ansprüche 1 bis 12, **dadurch gekennzeichnet, dass** H-funktionelle Startersubstanz, cyclisches Propylencarbonat und Katalysator kontinuierlich in den Reaktor zudosiert wird.

14. Verfahren gemäß Anspruch 13, **dadurch gekennzeichnet, dass** das resultierende Produkt kontinuierlich aus dem Reaktor abgeführt wird.
